(19) Europäisches Patentamt
European Patent Office
Office européen des brevets

(11) EP 3 937 350 A1

(12) EUROPEAN PATENT APPLICATION

(43) Date of publication:
12.01.2022 Bulletin 2022/02

(51) Int Cl.:
*H02K 1/20* (2006.01) *H02K 9/19* (2006.01)
*H02K 16/02* (2006.01)

(21) Application number: 21179691.7

(22) Date of filing: 16.06.2021

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 06.07.2020 US 202016920783

(71) Applicant: General Electric Company
Schenectady, NY 12345 (US)

(72) Inventors:
- OSAMA, Mohamed
85746 Garching (DE)
- ZATORSKI, Darek Tomasz
Cincinnati, 45215 (US)
- SIMPSON, Alexander Kimberley
Cincinnati, 45215 (US)
- ZIERER, Jr., Joseph John
Niskayuna, 12309 (US)

(74) Representative: Openshaw & Co.
8 Castle Street
Farnham, Surrey GU9 7HR (GB)

# (54) DUAL ROTOR ELECTRIC MACHINE

(57) An engine includes: a first rotating component; a second rotating component separate from the first rotating component; and an electric machine (200), the electric machine (200) including a first rotor (202) rotatable with the first rotating component; a second rotor (204) rotatable with the second rotating component; and a stator assembly (206) arranged between the first rotor (202) and the second rotor (204), the stator assembly (206) including a first set of windings (208) arranged adjacent to the first rotor (202), a second set of windings (208) arranged adjacent to the second rotor (204), and a non-ferromagnetic inner housing (238) arranged between the first set of windings (208) and the second set of windings (208).

100
104
114
108A 108
112
106
106B
106C 108B
120
108C
106A
152
136
128
126
150
110
R
118
116
118
134
202
144
138
146
160
132
206
154
102
124
137
158
200
204
148
122
124
A
$C_1$
$C_2$

FIG. 2



Printed by Jouve, 75001 PARIS (FR)

## Description

### FIELD

The present subject matter relates generally to an electric machine having multiple rotors, and to a gas turbine engine incorporating an electric machine having multiple rotors.

### BACKGROUND

Typical aircraft propulsion systems include one or more gas turbine engines. For certain propulsion systems, the gas turbine engines generally include a fan and a core arranged in flow communication with one another. Additionally, the core of the gas turbine engine general includes, in serial flow order, a compressor section, a combustion section, a turbine section, and an exhaust section. In operation, air is provided from the fan to an inlet of the compressor section where one or more axial compressors progressively compress the air until it reaches the combustion section. Fuel is mixed with the compressed air and burned within the combustion section to provide combustion gases. The combustion gases are routed from the combustion section to the turbine section. The flow of combustion gasses through the turbine section drives the turbine section and is then routed through the exhaust section, e.g., to atmosphere.

General gas turbine engine design criteria often include conflicting criteria that must be balanced or compromised, including increasing fuel efficiency, operational efficiency, and/or power output while maintaining or reducing weight, part count, and/or packaging (i.e., axial and/or radial dimensions of the engine). Accordingly, at least certain gas turbine engines include interdigitated rotors. For example, a turbine section may include a turbine having a first plurality of low speed turbine rotor blades and a second plurality of high speed turbine rotor blades. The first plurality of low speed turbine rotor blades may be interdigitated with the second plurality of high speed turbine rotor blades. Such a configuration may result in a more efficient turbine.

Moreover, for at least certain propulsion systems including the above gas turbine engines, it may be beneficial to include electric generators operable with the engine to extract energy and provide such energy to various other systems of the aircraft including the propulsion system.

The inventors of the present disclosure have found, however, that inclusion of multiple electric machines may undesirably increase a weight and complexity of the gas turbine engine. Accordingly, a system for extracting energy from a gas turbine engine that has the benefits of multiple separate electric machines, while reducing a weight and/or complexity of the system, would be useful.

### BRIEF DESCRIPTION

Aspects and advantages of the invention will be set forth in part in the following description, or may be obvious from the description, or may be learned through practice of the invention.

In one embodiment of the present disclosure, an engine is provided. The engine includes: a first rotating component; a second rotating component separate from the first rotating component; and an electric machine, the electric machine including a first rotor rotatable with the first rotating component; a second rotor rotatable with the second rotating component; and a stator assembly arranged between the first rotor and the second rotor, the stator assembly including a first set of windings arranged adjacent to the first rotor, a second set of windings arranged adjacent to the second rotor, and a non-ferromagnetic inner housing arranged between the first set of windings and the second set of windings.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:

Fig. 1 is a schematic cross-sectional view of an exemplary gas turbine engine incorporating an exemplary embodiment of a turbine section according to an aspect of the present disclosure;

Fig. 2 is a close-up, schematic, cross-sectional view of a turbine section in accordance with yet another exemplary aspect of the present disclosure;

Fig. 3 is a close-up, schematic, cross-sectional view of a turbine section in including an electric machine in accordance with an exemplary aspect of the present disclosure;

Fig. 4 is a cross-sectional view of an electric machine in accordance with another exemplary embodiment of the present disclosure as viewed along an axis of the electric machine;

Fig. 5 is a first perspective, cross-sectional view of the exemplary electric machine of Fig. 4;

Fig. 6 is a second perspective, cross-sectional view of the exemplary electric machine of Fig. 4;

Fig. 7 is a close-up, schematic, cross-sectional view of a turbine section in including an electric machine in accordance with another exemplary aspect of the present disclosure; and

Fig. 8 is a flow diagram of a method for operating an electric machine in accordance with an exemplary aspect of the present disclosure.

## DETAILED DESCRIPTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components.

The terms "forward" and "aft" refer to relative positions within a gas turbine engine or vehicle, and refer to the normal operational attitude of the gas turbine engine or vehicle. For example, with regard to a gas turbine engine, forward refers to a position closer to an engine inlet and aft refers to a position closer to an engine nozzle or exhaust.

The terms "upstream" and "downstream" refer to the relative direction with respect to fluid flow in a fluid pathway. For example, "upstream" refers to the direction from which the fluid flows, and "downstream" refers to the direction to which the fluid flows.

The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

Generally, the present disclosure provides for an electric machine that includes a first rotor rotatable with a first rotating component, a second rotor rotatable with a second rotating component, and a stator arranged between the first rotor and the second rotor. The stator includes a first set of windings arranged adjacent to the first rotor and a second set of windings arranged adjacent to the second rotor, as well as a core arranged between the first and second sets of windings.

In certain exemplary embodiments, the electric machine may be embedded within an engine, such as within an aeronautical gas turbine engine. With such a configuration, the first rotating component may be a first rotating component of the engine (such as a plurality of first turbine rotor blades), and the second rotating component may be a second rotating component of the engine (such as a plurality of second turbine rotor blades).

Such an electric machine may provide for the benefits of multiple separate electric machines, but without the excess weight and without the otherwise relatively large footprint required within the engine. Further, the electric machine may include features to enable the first rotor and first set of windings of the stator to operate independently (and to be controlled independently) of the second rotor and second set of windings. For example, the core may be a nonferromagnetic core, magnetically isolating the two sides. Further, separate electrical connections, busses, power electronics, etc. may be provided to facilitate the independent operations and control.

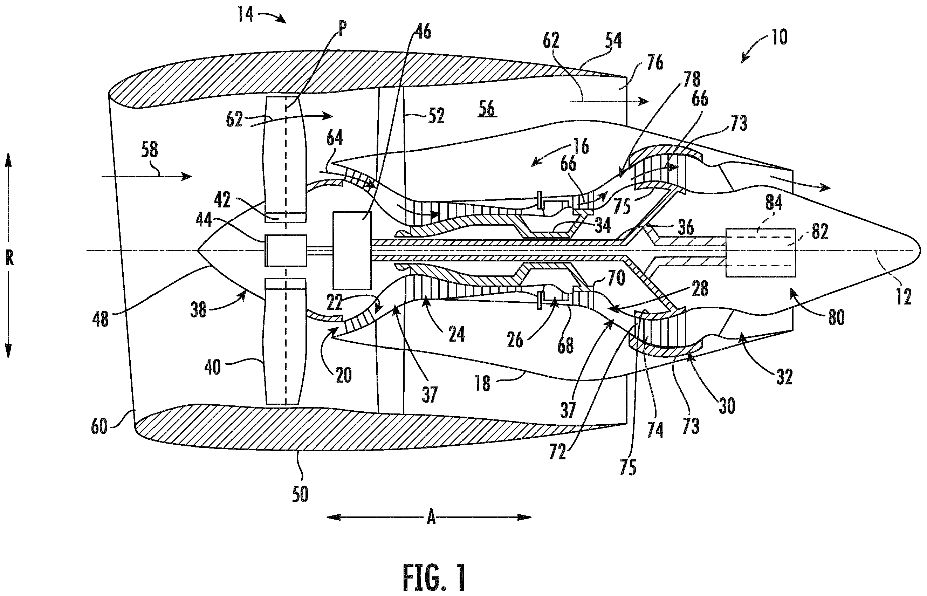

Referring now to the drawings, wherein identical numerals indicate the same elements throughout the figures, Fig. 1 is a schematic cross-sectional view of a gas turbine engine in accordance with an exemplary embodiment of the present disclosure. More particularly, for the embodiment of Fig. 1, the gas turbine engine is a high-bypass turbofan jet engine, referred to herein as "turbofan engine 10." As shown in Fig. 1, the turbofan engine 10 defines an axial direction A (extending parallel to a longitudinal centerline 12 provided for reference), a radial direction R, and a circumferential direction (i.e., a direction extending about the axial direction A; not depicted). In general, the turbofan engine 10 includes a fan section 14 and a core turbine engine 16 disposed downstream from the fan section 14.

The exemplary core turbine engine 16 depicted generally includes a substantially tubular outer casing 18 that defines an annular inlet 20. The outer casing 18 encases, in serial flow relationship, a compressor section including a booster or low pressure (LP) compressor 22 and a high pressure (HP) compressor 24; a combustion section 26; a turbine section including a high pressure (HP) turbine 28 and a low pressure (LP) turbine 30; and a jet exhaust nozzle section 32. The compressor section, combustion section 26, and turbine section together define a core air flowpath 37 extending from the annular inlet 20 through the LP compressor 22, HP compressor 24, combustion section 26, HP turbine section 28, LP turbine section 30 and jet nozzle exhaust section 32. A high pressure (HP) shaft or spool 34 drivingly connects the HP turbine 28 to the HP compressor 24. A low pressure (LP) shaft or spool 36 drivingly connects the LP turbine 30 to the LP compressor 22.

For the embodiment depicted, the fan section 14 includes a variable pitch fan 38 having a plurality of fan blades 40 coupled to a disk 42 in a spaced apart manner. As depicted, the fan blades 40 extend outwardly from disk 42 generally along the radial direction R. Each fan blade 40 is rotatable relative to the disk 42 about a pitch axis P by virtue of the fan blades 40 being operatively coupled to a suitable actuation member 44 configured to collectively vary the pitch of the fan blades 40 in unison. The fan blades 40, disk 42, and actuation member 44 are together rotatable about the longitudinal axis 12 by LP shaft 36 across a power gear box 46. The power gear box 46 includes a plurality of gears for stepping down the rotational speed of the LP shaft 36 to a more efficient rotational fan speed.

Referring still to the exemplary embodiment of Fig. 1, the disk 42 is covered by rotatable front nacelle 48 aerodynamically contoured to promote an airflow through the plurality of fan blades 40. Additionally, the exemplary fan section 14 includes an annular fan casing or outer nacelle 50 that circumferentially surrounds the fan 38 and/or at least a portion of the core turbine engine 16. It should be appreciated that for the embodiment depicted, the nacelle 50 is supported relative to the core turbine engine 16 by a plurality of circumferentially-spaced outlet guide vanes 52. Moreover, a downstream section 54 of the nacelle 50 extends over an outer portion of the core turbine engine 16 so as to define a bypass airflow passage 56 therebetween.

During operation of the turbofan engine 10, a volume of air 58 enters the turbofan engine 10 through an associated inlet 60 of the nacelle 50 and/or fan section 14. As the volume of air 58 passes across the fan blades 40, a first portion of the air 58 as indicated by arrows 62 is directed or routed into the bypass airflow passage 56 and a second portion of the air 58 as indicated by arrow 64 is directed or routed into the LP compressor 22. The ratio between the first portion of air 58 at arrows 62 and the second portion of air 58 at arrows 64 is commonly known as a bypass ratio. The temperature and pressure of the second portion of air 58 at arrows 64 is then increased as it is routed through the high pressure (HP) compressor 24 and into the combustion section 26, where it is mixed with fuel and burned to provide combustion gases 66.

The combustion gases 66 are routed through the HP turbine 28 where a portion of thermal and/or kinetic energy from the combustion gases 66 is extracted via sequential stages of HP turbine stator vanes 68 that are coupled to the outer casing 18 and HP turbine rotor blades 70 that are coupled to the HP shaft or spool 34, thus causing the HP shaft or spool 34 to rotate, thereby supporting operation of the HP compressor 24. The combustion gases 66 are then routed through the LP turbine 30 where a second portion of thermal and kinetic energy is extracted from the combustion gases 66 via sequential stages of a first plurality of LP turbine rotor blades 72 that are coupled to an outer drum 73, and a second plurality of turbine rotor blades 74 that are coupled to an inner drum 75. The first plurality of turbine rotor blades 72 and second plurality of turbine rotor blades 74 are alternatingly spaced and rotatable with one another through a gearbox (not shown) to together drive the LP shaft or spool 36, thus causing the LP shaft or spool 36 to rotate. Such thereby supports operation of the LP compressor 22 and/or rotation of the fan 38.

The combustion gases 66 are subsequently routed through the jet exhaust nozzle section 32 of the core turbine engine 16 to provide propulsive thrust. Simultaneously, the pressure of the first portion of air 62 is substantially increased as the first portion of air 62 is routed through the bypass airflow passage 56 before it is exhausted from a fan nozzle exhaust section 76 of the turbofan engine 10, also providing propulsive thrust. The HP turbine 28, the LP turbine 30, and the jet exhaust nozzle section 32 at least partially define a hot gas path 78 for routing the combustion gases 66 through the core turbine engine 16.

Additionally, the exemplary turbofan engine 10 depicted includes an electric machine 80 rotatable with the fan 38. Specifically, for the embodiment depicted, the electric machine 80 is co-axially mounted to and rotatable with the LP shaft 36 (the LP shaft 36 also rotating the fan 38 through, for the embodiment depicted, the power gearbox 46). As used herein, "co-axially" refers to the axes being aligned. It should be appreciated, however, that in other embodiments, an axis of the electric machine 80 may be offset radially from the axis of the LP shaft 36 and further may be oblique to the axis of the LP shaft 36, such that the electric machine 80 may be positioned at any suitable location at least partially inward of the core air flowpath 37.

The electric machine 80 includes a rotor 82 (or rather, multiple rotors, as will be explained in more detail, below) and a stator 84. It will be appreciated that, in certain exemplary embodiments, the turbofan engine 10 may be integrated into a propulsion system. With such an exemplary embodiment, the electric machine 80 may be electrically connected, or connectable, to one or more electric propulsion devices of the propulsion system (such as one or more electric fans), one or more power storage devices, etc.

It should be appreciated, however, that the exemplary turbofan engine 10 depicted in Fig. 1 is by way of example only, and that in other exemplary embodiments, the turbofan engine 10 may have any other suitable configuration. For example, in other exemplary embodiments, the turbofan engine 10 may instead be configured as any other suitable turbomachine including, e.g., any other suitable number of shafts or spools, and excluding, e.g., the power gearbox 46 and/or fan 38, etc. Accordingly, it will be appreciated that in other exemplary embodiments, the turbofan engine 10 may instead be configured as, e.g., a turbojet engine, a turboshaft engine, a turboprop engine, etc.

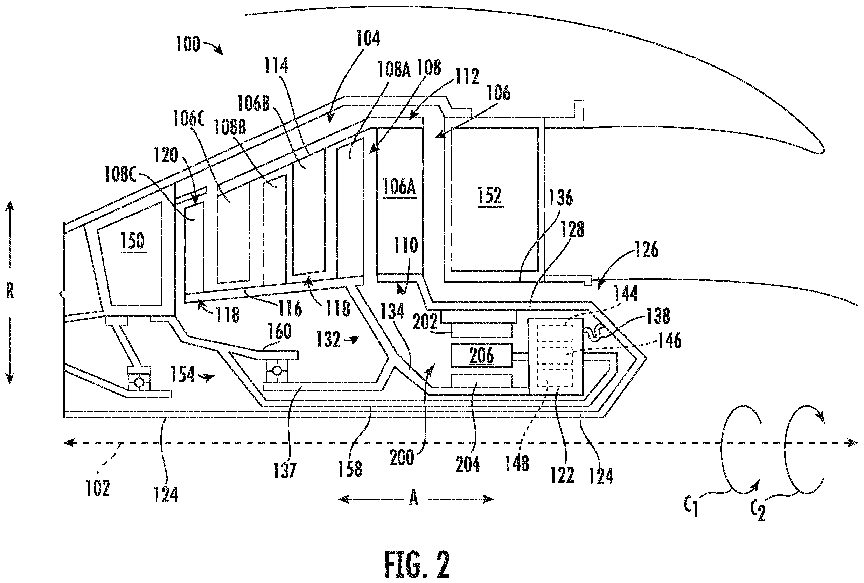

Referring now to Fig. 2, a schematic, side, cross-sectional view is provided of a turbine section 100 of a turbomachine in accordance with an exemplary embodiment of the present disclosure. The exemplary turbine section 100 depicted in Fig. 2 may be incorporated into, e.g., the exemplary turbofan engine 10 described above with reference to Fig. 1. However, in other exemplary embodiments, the turbine section 100 may be integrated into any other suitable machine utilizing a turbine.

Accordingly, it will be appreciated that the turbomachine generally defines a radial direction R, an axial direction A, and a longitudinal centerline 102. Further, the turbine section 100 includes a turbine 104, with the turbine 104 of the turbine section 100 being rotatable about the axial direction A (i.e., includes one or more components rotatable about the axial direction A). For example, in certain embodiments, the turbine 104 may be a low pressure turbine (such as the exemplary low pressure turbine 30 of Fig. 1), or alternatively may be any other turbine (such as, a high pressure turbine, an intermediate turbine, a dual use turbine functioning as part of a high pressure turbine and/or a low pressure turbine, etc.).

Moreover, for the exemplary embodiment depicted, the turbine 104 includes a plurality of turbine rotor blades spaced along the axial direction A. More specifically, for the exemplary embodiment depicted, the turbine 104 includes a first plurality of turbine rotor blades 106 and a second plurality of turbine rotor blades 108. As will be discussed in greater detail below, the first plurality of turbine rotor blades 106 and second plurality of turbine rotor blades 108 are alternatingly spaced along the axial direction A.

Referring first to the first plurality of turbine rotor blades 106, each of the first plurality of turbine rotor blades 106 extends generally along the radial direction R between a radially inner end 110 and a radially outer end 112. Additionally, the first plurality of turbine rotor blades 106 includes a first turbine rotor blade 106A, a second turbine rotor blade 106B, and a third turbine rotor blade 106C, each spaced apart from one another generally along the axial direction A. At least two of the first plurality of turbine rotor blades 106 are spaced from one another along the axial direction A and coupled to one another at the respective radially outer ends 112. More specifically, for the embodiment depicted, each of the first turbine rotor blade 106A, the second turbine rotor blade 106B, and the third turbine rotor blade 106C are coupled to one another through their respective radially outer ends 112. More specifically, still, each of the first turbine rotor blade 106A, the second turbine rotor blade 106B, and the third turbine rotor blade 106C of the first plurality of turbine rotor blades 106 are coupled at their respective radially outer ends 112 through an outer drum 114.

Further, the second plurality of turbine rotor blades 108, each also extend generally along the radial direction R between a radially inner end 118 and a radially outer end 120. Additionally, for the embodiment depicted, the second plurality of turbine rotor blades 108 includes a first turbine rotor blade 108A, a second turbine rotor blade 108B, and a third turbine rotor blade 108C, each spaced apart from another generally along the axial direction A. For the embodiment depicted, at least two of the second plurality of turbine rotor blades 108 are spaced from one another along the axial direction A and coupled to one another at the respective radially inner ends 118. More specifically, for the embodiment depicted, each of the first turbine rotor blade 106A, the second turbine rotor blade 106B, and the third turbine rotor blade 108C of the second plurality of turbine rotor blades 108 are coupled to one another through their respective radially inner ends 118. More specifically, still, each of the first turbine rotor blade 108A, the second turbine rotor blade 108B, and the third turbine rotor blade 108C of the second plurality of turbine rotor blades 108 are coupled at their respective radially inner ends 118 through an inner drum 116.

It should be appreciated, however, that in other exemplary embodiments, the first plurality of turbine rotor blades 106 and/or the second plurality of turbine rotor blades 108 may be coupled together in any other suitable manner, and that as used herein, "coupled at the radially inner ends" and "coupled at the radially outer ends" refers generally to any direct or indirect coupling means or mechanism to connect the components. For example, in certain exemplary embodiments, the second plurality of turbine rotor blades 108 may include multiple stages of rotor (not shown) spaced along the axial direction A, with the first turbine rotor blade 108A, the second turbine rotor blade 108B, and the third turbine rotor blade 108C coupled to the respective stages of rotors at the respectively radially inner ends 118 through, e.g. dovetail base portions. The respective stages of rotors may, in turn, be coupled together to therefore couple the second plurality of turbine rotor blades at their respective radially inner ends 118.

Referring still to the embodiment depicted in Fig. 2, as stated, all the first plurality of turbine rotor blades 106 and the second plurality of turbine rotor blades 108 are alternatingly spaced along the axial direction A. As used herein, the term "alternatingly spaced along the axial direction A" refers to the second plurality of turbine rotor blades 108 including at least one turbine rotor blade positioned along the axial direction A between two axially spaced turbine rotor blades of the first plurality of turbine rotor blades 106.

Notably, however, in other exemplary embodiments, the first plurality of turbine rotor blades 106 may have any other suitable configuration and/or the second plurality of turbine rotor blades 108 may have any other suitable configuration. For example, it will be appreciated that in other exemplary embodiments, the first plurality of turbine rotor blades 106 and/or the second plurality of turbine rotor blades 108 may include any other suitable number of stages of turbine rotor blades, such as two stages, four stages, etc., and further that in certain exemplary embodiments, the turbine 104 may additionally include one or more stages of stator vanes.

Referring still to the embodiment of Fig. 2, the turbomachine further includes a gearbox 122 and a spool 124, with the first plurality of turbine rotor blades 106 and the second plurality of turbine rotor blades 108 rotatable with one another through the gearbox 122. In at least certain exemplary embodiments, the spool 124 may be configured as, e.g., the exemplary low pressure spool 36 described above with reference to Fig. 1. Additionally, the exemplary turbine section further includes a turbine center frame 150 and a turbine rear frame 152.

It should be appreciated, however, that in other exemplary embodiments, the spool 124 may be any other spool (e.g., a high pressure spool, an intermediate spool, etc.), and further that the gearbox 122 may be any other suitable speed change device positioned at any other suitable location. For example, in other exemplary embodiments, the gearbox 122 may instead be a hydraulic torque converter, an electric machine, a transmission, etc., and may be positioned at any suitable location.

Referring still to Fig. 2, the turbine section 100 includes a first support member assembly 126 having a first support member 128, and a second support member assembly 132 having a second support member 134. The first support member 128 couples the radially inner end 110 of the first turbine rotor blade 106A of the first plurality of turbine rotor blades 106 to the spool 124, and further couples the first plurality of turbine rotor blades 106 to the gearbox 122. Additionally, the second support member 134 similarly couples the second plurality of turbine rotor blades 108, or rather the radially inner end 118 of the first turbine rotor blade 108A of the second plurality of turbine rotor blades 108, to the gearbox 122. Notably, however, in other exemplary embodiments, the first support member 128 may couple to any of the other turbine rotor blades within the first plurality of turbine rotor blades 106 at a radially inner end 110 (either directly or through, e.g., a rotor - not shown), and similarly, the second support member 134 may couple to any of the other turbine rotor blades of the second plurality of turbine rotor blades 108 at the radially inner ends 118, respectively, either directly or through, e.g., a rotor - not shown).

Further, for the embodiment depicted the first support member assembly 126 includes a flexible connection 138 attached to the first support member 128 at a juncture of the first support member 128 (although, in other embodiments, the flexible connection 138 may be formed integrally with the first support member 128).

The exemplary gearbox 122 depicted generally includes a first gear coupled to the first plurality of turbine rotor blades 106, a second gear coupled to the second plurality of turbine rotor blades 108, and a third gear coupled to the turbine center frame 150. More specifically, for the embodiment depicted, the gearbox 122 is configured as a planetary gear box. Accordingly, the first gear is a ring gear 144, the second gear is a sun gear 148, and the third gear is a planet gear 146. More specifically, the exemplary turbine section 100 depicted further a center frame support assembly 154 coupled to the turbine center frame 150. The center frame support assembly 154, for the embodiment depicted, includes a radially inner center frame support member 158 and a radially outer center frame support member 160. The plurality of planet gears 146 are fixedly coupled (i.e., fixed along a circumferential direction) to the turbine center frame 150 through the center frame support assembly 154, and more particularly, through the radially inner center frame support member 158 of the center frame support assembly 154.

In such a manner, it will be appreciated that for the embodiment depicted, the first plurality of turbine rotor blades 106 are configured to rotate in an opposite direction than the second plurality of turbine rotor blades 108. For example, the first plurality of turbine rotor blades 106 may be configured to rotate in a first circumferential direction C1, while the second plurality of turbine rotor blades 108 may be configured to rotate in a second circumferential direction C2, opposite the first circumferential direction C1. It should be understood, however, that although the structures provided herein therefore enable the turbine 104 to "counter-rotate," in other embodiments, the turbine 104 may instead be configured to "co-rotate," wherein the first plurality of turbine rotor blades 106 and the second plurality of turbine rotor blades 108 each rotate the same circumferential direction.

As is depicted, the first plurality of turbine rotor blades 106 is coupled to the first gear, i.e., the ring gear 144, of the gearbox 122 through the first support member 128, and the second plurality of turbine rotor blades 108 is coupled to the second gear, i.e., the sun gear 148, of the gearbox 122 through the second support member 134. As is also depicted, the first support member 128 extends aft of the gearbox 122, and more specifically, extends around an aft end of the gearbox 122. More specifically, still, for the embodiment depicted, the first support member 128 extends generally from the radially inner end 110 of the first turbine rotor blade 106A of the first plurality of turbine rotor blades 106 (i.e., a location aligned with, or forward of, the gearbox 122 along the axial direction A), around the aft end of the gearbox 122 and to the spool 124 to mechanically couple the first plurality of turbine rotor blades 106 to the spool 124.

Referring still to Fig. 2, it will be appreciated that for the embodiment depicted, the turbomachine further includes an electric machine 200. The electric machine 200 depicted is embedded within the turbine section 100, and further for the embodiment depicted is positioned aft of the turbine 104. In certain exemplary embodiments, the electric machine 200 may be configured in a similar manner to the exemplary electric machine 80 described above with reference to Fig. 1.

For example, for the embodiment shown, the electric machine 200 generally includes a first rotor 202 rotatable with a first rotating component of the engine, a second rotor 204 rotatable with a second rotating component of the engine, and a stator assembly 206 arranged between the first rotor 202 and the second rotor 204. More specifically, as noted above, the exemplary electric machine 200 depicted in Fig. 2 is embedded within the turbine section of the exemplary aeronautical gas turbine engine depicted. It will further be appreciated that for the exemplary embodiment depicted, the first rotating component is configured to rotate in the first circumferential direction C1 of the engine and the second rotating component is configured to rotate in a second circumferential direction C2 of the engine, with the first circumferential direction C1 being opposite the second circumferential direction C2. More specifically, for the embodiment shown, the first rotating component includes the first plurality of turbine rotor blades 106 in the second rotating component includes the second plurality of turbine rotor blades 108 interdigitated with the first plurality of turbine rotor blades 106. More specifically, still, for the embodiment shown, the first rotor 202 is coupled to the first support member 128 of the first support member assembly 126; and the second rotor 204 is coupled to the second support member 134 of the second support member assembly 132. Further for the embodiment of Fig. 2, the stator assembly 206 is coupled to the turbine center frame support 154 across the gearbox 122 (e.g., through a planet gear carrier of the gearbox 122).

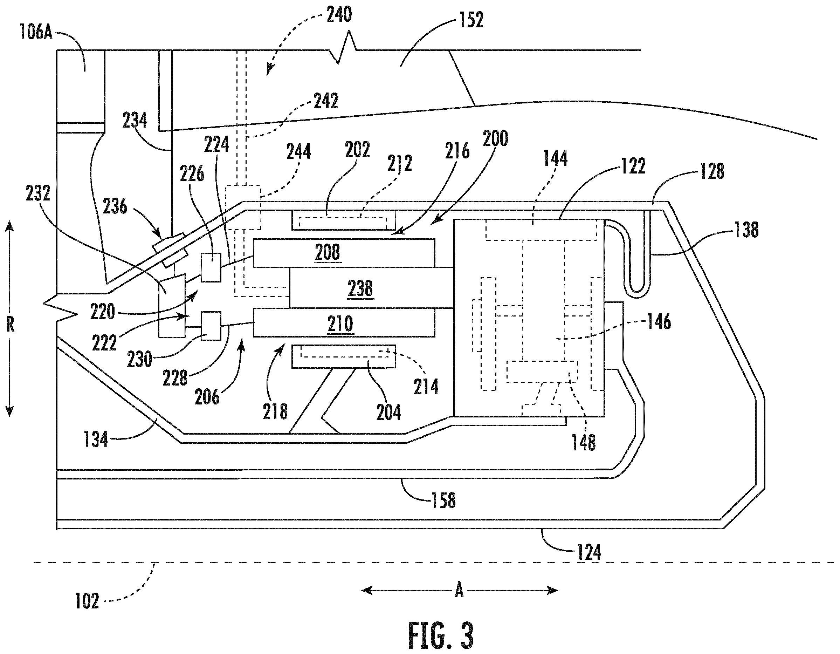

Referring now to Fig. 3, a close-up view of the exemplary electric machine 200 of Fig. 2 is provided. As shown, and described above, the exemplary electric machine 200 includes the first rotor 202 rotatable with the first rotating opponent of the engine (the first plurality of turbine rotor blades 106 for the embodiment shown), the second rotor 204 rotatable with the second rotating component (the second plurality of turbine rotor blades 108 for the embodiment shown), and the stator assembly 206 arranged between the first rotor 202 and the second rotor 204.

As is depicted schematically in Fig. 3, the stator assembly 206 includes a first set of windings 208 arranged adjacent to the first rotor 202 and a second set of windings 210 arranged adjacent to the second rotor 204. It will be appreciated that is used herein, the term "adjacent to" with reference to the position of a set of windings relative to a rotor, refers to the set of windings being arranged to interact with the rotor in order to convert rotational energy to electrical power, convert electric power to rotational energy, or both, with at least a minimum degree of efficiency as would be expected from a functioning electric machine.

It will be appreciated that the first rotor 202 may include a plurality of magnets 212 arranged circumferentially to interact with the first set of windings 208, and similarly, the second rotor 204 may include a plurality of magnets 214 arranged circumferentially to interact with the second set of windings 210. The plurality of magnets 212, 214 of the first rotor 202 and of the second rotor 204 may be permanent magnets. For these embodiments, the first set of windings 208 and the second set of windings 210 may each include one or more coils of electrically conductive wire (described in more detail with reference to the embodiment below).

It should be appreciated, however, that in other embodiments, the electric machine 200 may alternatively be configured as an electromagnetic electric machine, including a plurality of electromagnets and active circuitry, as an induction type electric machine, a switched reluctance type electric machine, a synchronous AC electric machine, or as any other suitable electric generator or motor.

Moreover, as is depicted in Fig. 3, the first set of windings 208 and first rotor 202 are arranged in a radial flux configuration and the second set of windings 210 and second rotor 204 are similarly arranged in a radial flux configuration. In such a manner, it will be appreciated that the first set of windings 208 and first rotor 202 define a first air gap 216 therebetween along the radial direction R, and similarly, the second set of windings 210 and second rotor 204 define a second air gap 218 therebetween also on the radial direction R.

As will be appreciated, the first set of windings 208 and first rotor 202 may operate independently of the second set of windings 210 and second rotor 204, and further may be controlled independently of the second set of windings 210 and second rotor 204. For example, the first set of windings 208 and first rotor 202 may be operated as an electric motor converting electrical power received from the first set of windings 208 to rotational power, or alternatively as an electric generator converting rotational power of the first plurality of turbine rotor blades 106 to electric power. Similarly, the second set of windings 210 and second rotor 204 may be operated as an electric motor converting electrical power received from the second set of windings 210 to rotational power, or alternatively as an electric generator converting rotational power of the second plurality of turbine rotor blades 108 to electric power. The first set of windings 208 and first rotor 202 may switch between an electric generator mode and electric motor mode independently of whether the second set of windings 210 and second rotor 204 are being operated in an electric generator mode or electric motor mode. Similarly, the second set of windings 210 and second rotor 204 may switch between an electric generator mode and electric motor mode independently of whether the first set of windings 208 and first rotor 202 are being operated in an electric generator mode or electric motor mode.

More specifically, for the exemplary embodiment depicted in Fig. 3, the first set of windings 208 of the stator assembly 206 is electrically coupled to a first electric line assembly 220 and the second set of windings 210 of the stator assembly 206 is electrically coupled to a second electric line assembly 222. The first electric line assembly 220 includes an electric line 224 and, for the embodiment shown, a first set of power electronics 226. When operated as an electric motor, the first set of power electronics 226 may convert direct current electric power to alternating current electric power (such as three-phase alternating current electric power) to be provided to the first set of windings 208. By contrast, when operated as an electric generator, the first set of power electronics 226 may convert alternating current electric power to direct current electric power.

Similarly, the second electric line assembly 222 includes an electric line 228 and, for the embodiment shown, a second set of power electronics 230. When operated as an electric motor, the second set of power electronics 230 may convert direct current electric power to alternating current electric power (such as three-phase alternating current electric power) to be provided to the second set of windings 210. By contrast, when operated as an electric generator, the second set of power electronics 230 may convert alternating current electric power to direct current electric power.

Further for the embodiment shown, the engine includes a controller 232 and an electric bus 234. The controller 232 is electrically coupled to electric bus 234, as well as the first electric line assembly 220 and the second electric line assembly 222. In such a manner, the controller 232 may receive electric power from one or both of the first electric line assembly 220 and second electric line assembly 222 and provide such electric power to the electric bus 234. Additionally or alternatively, the controller 232 may provide electric power received from the electric bus 234 to one or both of the first electric line assembly 220 and second electric line assembly 222. Notably, for the embodiment shown, the electric bus 234 includes one or more stationary to rotating electrical connections 236, which may be, e.g., brushes or other suitable electrical connections.

It will be appreciated, however, that in other exemplary embodiments, the first and second sets of windings 208, 210 of the electric machine 200 may be electrically coupled to various electric line assemblies, electric buses, controllers, power electronics, and other suitable accessories, and further may be electrically coupled to these accessories in any suitable manner. For example, in other embodiments, the electric line assemblies 220, 222 may extend through the gearbox 122, such as through a planet gear carrier of the gearbox 122, and follow around the turbine center frame support 154. Additionally, or alternatively, still, the first and second electric line assemblies 220, 222 may be electrically coupled to separate electric buses (each similar to the electric bus 234).

Referring still to Fig. 3, it will be appreciated that the stator assembly 206 further includes a nonferromagnetic inner housing 238 arranged between the first set of windings 208 and the second set of windings 210. The nonferromagnetic inner housing 238 may substantially completely magnetically isolate the first set of windings 208 and first rotor 202 from the second set of windings 210 and second rotor 210. In such a manner, it will be appreciated that the nonferromagnetic inner housing 238 may be formed of, or include, a nonferromagnetic material. In such a manner, the nonferromagnetic inner housing 238 of the stator assembly 206 may not transmit any magnetic flux from the first rotor 202 and first set of windings 208 to the second rotor 204 and second set of windings 210. Such a configuration may allow for the first rotor 202 and first set of windings 208 to operate more independently from the second rotor 204 and second set of windings 210.

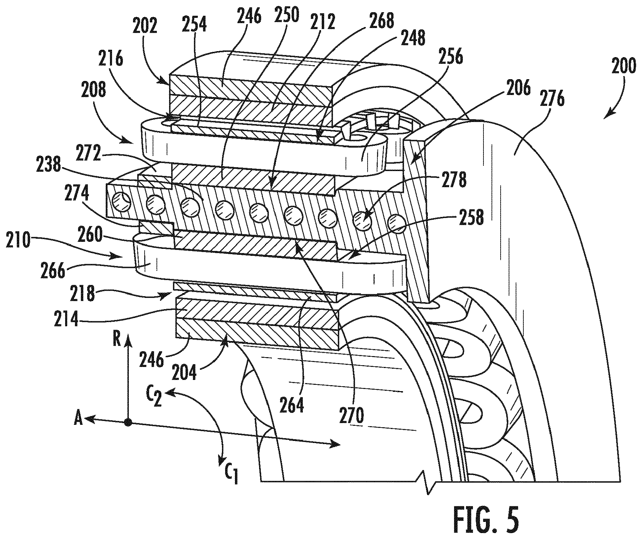

Moreover, in order to maintain a temperature of the stator assembly 206 within a desired operating temperature range, the electric machine 200 includes a cooling assembly. More specifically, the exemplary electric machine 200 depicted includes a fluid cooling system, and more specifically, still, for the embodiment shown the electric machine 200 includes a liquid cooling system 240. Further, as will be shown in greater detail with respect to the embodiment of Figs. 5 through 7, the nonferromagnetic inner housing 238 defines a cooling passage (not shown) extending therethrough in fluid communication with the liquid cooling system 240 for maintaining a temperature of the stator assembly 206 within a desired operating temperature range.

For the embodiment shown, the liquid cooling system 240 includes a fluid delivery conduit 242. The fluid delivery conduit 242 extends, for the embodiment shown, through the turbine rear frame 152, and includes a stationary to rotating fluid connection 244 extending through the first support member 128. In such a manner, the liquid cooling system 240 may provide the nonferromagnetic inner housing 238 of the stator assembly 206 with a cooling fluid during operation. The cooling fluid may be, e.g., lubrication oil, supercritical CO2, a consumable liquid (such as water), or any other suitable cooling fluid. Although not depicted, in certain exemplary embodiments, the liquid cooling system 240 may include one or more scavenge lines for collecting the cooling fluid and returning the cooling fluid back through, e.g., the turbine rear frame 152.

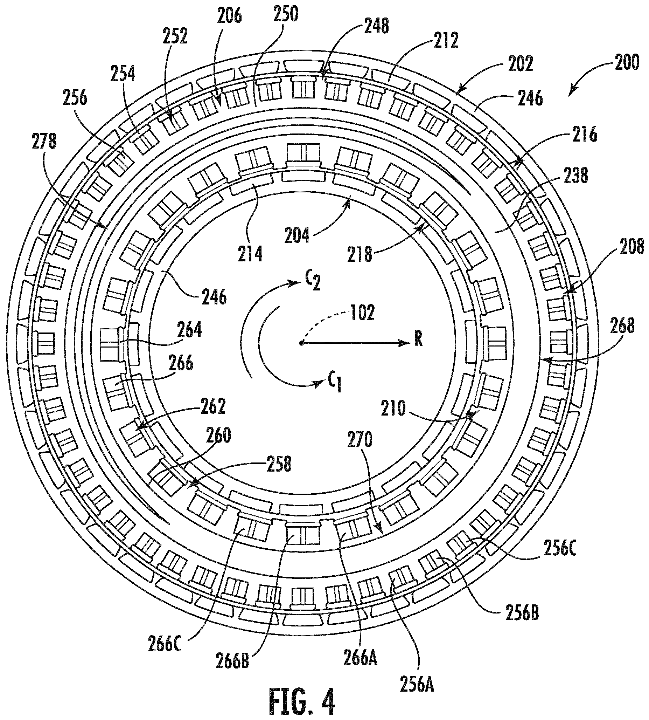

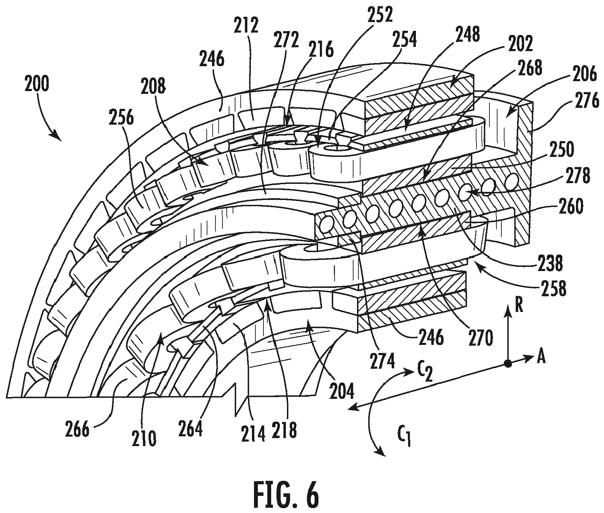

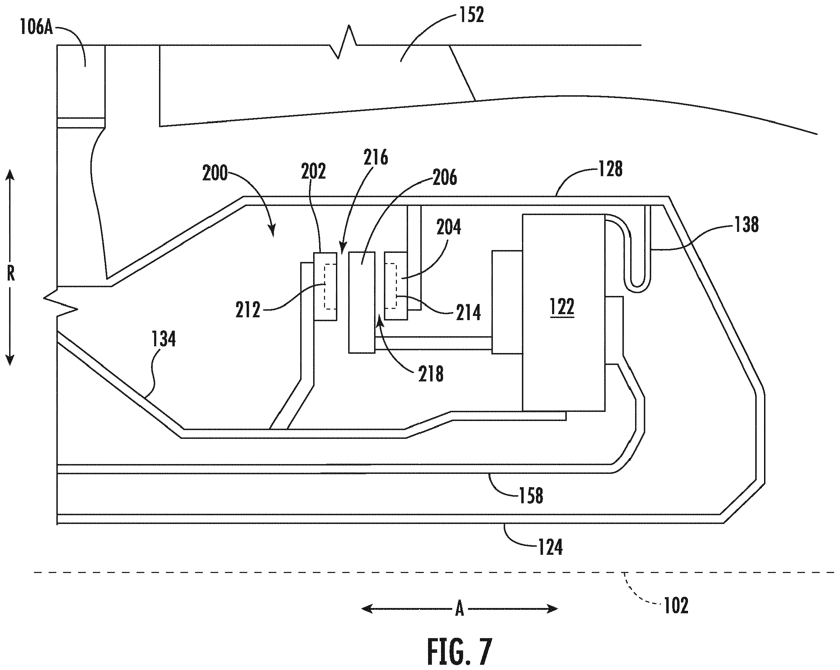

Referring now to Figs. 4 through 6, an electric machine 200 in accordance with an exemplary embodiment of the present disclosure is provided. The electric machine 200 of Figs. 4 through 6 may be incorporated into the engine described above with reference to Fig. 3, as the exemplary electric machine 200 described therewith. Fig. 5 provides a cross-sectional view of the exemplary electric machine 200 is viewed along an axial direction A, Fig. 6 provides a perspective, cross-sectional view of the exemplary electric machine 200 from a first side, and Fig. 7 provides a perspective cross-sectional view of the exemplary electric machine 200 from a second side.

As with the exemplary electric machine 200 described above, the exemplary electric machine 200 of Figs. 4 through 6 generally includes a first rotor 202, which may be rotatable with a first rotating component of an engine, a second rotor 204, which may be rotatable with a second rotating component of an engine, and a stator assembly 206 arranged between the first rotor 202 and the second rotor 204. The stator assembly 206 includes a first set of windings 208 arranged adjacent to the first rotor 202, a second set of windings 210 arranged adjacent to the second rotor 204 and a nonferromagnetic inner housing 238 arranged between the first set of windings 208 and the second set of windings 210.

Further, referring specifically to the first rotor 202, the first rotor 202 includes a first rotor back iron 246 and a plurality of first rotor magnets 212, which as noted above, may be permanent magnets. The plurality of first rotor magnets 212 are arranged generally along the circumferential direction C of the electric machine 200. Similarly, referring specifically to the second rotor 204, the second rotor 204 includes a second rotor back iron 248 and a plurality of second rotor magnets 214. The plurality of second rotor magnets 214 may also be permanent magnets, and are arranged generally along the circumferential direction C of electric machine 200.

The stator assembly 206 includes an outer stator member 248 having a ferromagnetic outer stator core 250 defining a plurality of outer stator slots 252 and including a plurality of outer stator wedges 254. The first set of windings 208 includes a plurality of outer stator coils 256 arranged at least partially within the outer stator slots 252 with the plurality of outer stator wedges 254 holding the plurality of outer stator coils 256 in place. Similarly, the stator assembly 206 further includes an inner stator member 258 having a ferromagnetic inner stator core 260 defining a plurality of inner stator slots 262 and including a plurality of inner stator wedges 264. The second set of windings 210 includes a plurality of inner stator coils 266 arranged at least partially within the inner stator slots 262, with the plurality of inner stator wedges 264 holding the plurality of inner stator coils 266 in place.

Moreover, the stator assembly 206 includes the nonferromagnetic inner housing 238 arranged between the first set of windings 208 and the second set of windings 210. More specifically, the nonferromagnetic inner housing 238 includes the outer stator member 248 positioned on an outer side of the nonferromagnetic inner housing 238 along the radial direction R, and the inner stator member 258 positioned on an inner side of the nonferromagnetic inner housing 238 along the radial direction R.

Specifically, for the embodiment shown, the nonferromagnetic inner housing 238 extends along the axial direction A between a first end and a second end. Further, the nonferromagnetic inner housing 238 includes an outer landing 268 for receiving the outer stator member 248, or rather the outer stator core 250 of the outer stator member 248, and an inner landing 270 for receiving the inner stator member 258, or rather the inner stator core 260 of the inner stator member 258. An outer retainer ring 272 presses the outer stator member 248 against an outer lip at an end of the outer landing 268, and an inner retainer ring 274 presses the inner stator member 258 against an inner lip at an end of the inner landing 270.

The nonferromagnetic inner housing 238 further includes a mounting plate 276 at the second end for mounting the stator assembly 206 of the electric machine 200 within an environment, such as within an engine, such as to a gearbox of an engine, such as to the gearbox 122 of the engine described above with respect to Fig. 3. In such manner, will be appreciated that the nonferromagnetic inner housing 238 is a structural frame for the stator assembly 206, as it provides, e.g., a foundation for mounting the outer stator member 248 and inner stator member 258, as well as for mounting the stator assembly 206 within an environment.

Further, as noted above, the nonferromagnetic inner housing 238 of the stator assembly 206 is formed of a nonferromagnetic material, and is designed to substantially completely magnetically isolate the first set of windings 208 of the stator assembly 206 and first rotor 202 from the second set of windings 210 of the stator assembly 206 and second rotor 204. Specifically, for the embodiment shown, the nonferromagnetic inner housing 238 defines a thickness along the radial direction R to provide such functionality.

Notably, by contrast, the ferromagnetic outer stator core 250 and ferromagnetic inner stator core 260 are each formed of a ferromagnetic material to carry a magnetic flux.

Moreover, the exemplary nonferromagnetic inner housing 238 depicted defines a cooling passage 278 extending therethrough. The cooling passage 278 may be fluidly coupled to a liquid cooling system (such as liquid cooling system 240), or another fluid cooling system (such as an air cooling system), to maintain a temperature of the nonferromagnetic inner housing 238 within a desired operating temperature range, and more specifically, to maintain a temperature of the stator assembly 206 within a desired operating to mature range. The cooling passage 278 may be a plurality of individual cooling passages 278, or alternatively, for the embodiment shown, may be a single cooling passage defining, e.g., a spiral shape through an axial length of the nonferromagnetic inner housing 238. Such a configuration is shown, e.g., in Fig. 5, wherein the cooling passage 278 enters the reference plane in view in Fig. 5 at one circumferential position and exits the reference plane in view in Fig. 5 at a separate circumferential location.

In order to manufacture the nonferromagnetic inner housing 238 having such features, a 3D printing process, or any other suitable additive manufacturing process, may be utilized. In such a manner, be appreciated that the nonferromagnetic inner housing 238 of the stator assembly 206 may be formed through an additive manufacturing process.

By contrast, however, in other exemplary embodiments, the inner housing 238 may be formed through one or more suitable machining processes, casting processes, and the like. Further, in certain exemplary embodiments, the outer stator core 250 and inner stator core 260 may be formed through a suitable lamination process, or other suitable process.

Incorporation of an electric machine 200 in accordance with one or more of these exemplary embodiments may provide for a relatively compact electric machine 200 capable of operating with two separate rotating components of an engine (e.g., rotating at different speeds, different directions, or both), saving weight, complexity, etc. Further, an electric machine in accordance with one or more of these exemplary embodiments may facilitate an increased flexibility in controlling the gas turbine engine, by adding the capability to operate the first set of windings 208 and first rotor 202, and second set of windings 210 and second rotor 204 independently from one another as electric motors, electric generators, or both, potentially varying a ratio of electric power extracted from, or mechanical/rotational power added to, a first rotating component coupled to the first rotor relative to a second rotating component coupled to the second rotor. In such a manner, the electric machine may be capable of transferring energy from one rotating component to another rotating component, adding power to both rotating components, and/or extracting energy from both rotating components.

For example, as noted above, in at least certain exemplary aspects, the electric machine 200 may be configured to operate with counter-rotating components. For example, the first rotor 202 may be rotatable with a first rotating component and the second rotor 204 may be rotatable with a second rotating component, with the first rotating component configured to rotate in a first circumferential direction C1 and the second rotating component configured to rotate in a second circumferential direction C2. The first circumferential direction C1 may be opposite the second circumferential direction C2. With such a configuration, it will be appreciated that the plurality of outer stator coils 256 of the first set of windings 208 may be arranged in a pattern opposite a pattern of the plurality of inner stator coils 266 of the second set of windings 210. For example, when the first set of windings 208 and second set of windings 210 are arranged in a three-phase configuration, the plurality of outer stator coils 256 may be arranged in a pattern of A, B, C (noted as "256A," "256B," "256C," respectively in Fig. 4), A, B, C, A, B, C, etc. along the first circumferential direction C1, and the plurality of inner stator coils 266 may be arranged in a pattern of C, B, A (noted as "266C," "266B," "266A," respectively in Fig. 4), C, B, A, C, B, A, etc. along the first circumferential direction C1. Notably, the references "A," B," and "C" may each refer to particular series of windings of a pole of the given electric machine.

In addition to the above, in order to accommodate counter-rotating components of, e.g., an engine, it may be beneficial to have the magnetic field in the ferromagnetic outer stator core 250 rotating in an opposite direction to the magnetic field in the ferromagnetic inner stator core 260. To achieve this contrarotation of the stator magnetic fields, a spatial sequence of the first set of windings 208 (a multiphase winding) must be opposite a spatial sequence of the second set of windings 210 (also a multiphase winding. Such a configuration is discussed above. Additionally, however, a temporal sequence of the multiphase currents flowing in the first set of windings 208 must be opposite a temporal sequence in the second set of windings 210. (Notably, as used herein, the term "temporal" refers to a sequence of electrical flow.) For example, the first set of windings 208 may be ordered as U-V-W in a clockwise direction spatially and their currents may also be ordered in same sequence temporally leading to a magnetic field that is rotating in the clockwise direction in the outer stator core 250. Meanwhile, the second set of windings 210 may be ordered as U-V-W in a counter clockwise direction (as viewed in the same orientation) spatially and their currents may also be ordered in the same sequence temporally leading to a magnetic field that is rotating in counter clockwise direction in the inner stator core 260.

The above configuration may be further illustrated by the following examples. In one example embodiment, which may be a radial flux configuration, three phase electric machine may be arranged as follows: a first three phase set of windings (Nai, Nbi & Nci) may be arranged on the outer stator core 250 and may have corresponding three phase currents (iai, ibi, ici) flowing in them. The first three phase set of windings may include a first number of poles, p1. In addition, a second three phase set of windings ($Na_2$, $Nb_2$ & $Nc_2$) may be arranged on the inner stator core 260 and may have corresponding three phase currents ($ia_2$, $ib_2$, $ic_2$) flowing in them. The second three phase set of windings may include a second number of poles, p2. The first number of poles p1 may be different than the second number of poles p1. In an alternative configuration, which may be an axial flux configuration, the three phase electric machine may be arranged as follows: a first three phase set of windings ($Na_1$, $Nb_1$ & $Nc_1$) may be arranged on a right core side of the stator and may have corresponding three phase currents ($ia_1$, $ib_1$, $ic_1$) flowing in them; and a second three phase set of windings ($Na_2$, $Nb_2$ & $Nc_2$) may be arranged on a left core side of the stator and may have corresponding three phase currents ($ia_2$, $ib_2$, $ic_2$) flowing in them. Again, the first three phase set of windings may include a first number of poles, p1, and the second three phase set of windings may include a second number of poles, p2.

Regardless, a spatial sequence of the winding may be defined by the winding functions of each of the two sets of three phase windings. For first set of three phase windings, the fundamental components of the winding functions may be:

$$Na_1(\theta_{h4}) = N_1 \cos(\theta_{h4});$$

$$Nb_1(\theta_{h4}) = N_1 \cos(\theta_{h4} - 2\pi/2);$$

$$Nc_1(\theta_{h4}) = N_1 \cos(\theta_{h4} + 2\pi/2);$$

wherein, $N_1$: peak winding function of first balanced three phase winding set [turns]; and
wherein, $\theta_{e1}$: is the spatial electrical angle for the first set of windings with the number of poles p1 around the electric machine periphery [radians].

Moreover, the currents flowing in those first set of windings, may be defined as:

$$ia_1(t) = Ipk_1 \cos(\omega_1 t);$$

$$ib_1(t) = Ipk_1 \cos(\omega_1 t - 2\pi/2);$$

$$ic_1(t) = Ipk_1 \cos(\omega_1 t + 2\pi/2);$$

wherein, $Ipk_1$: Peak (magnitude) of current flowing in first balanced three phase winding set [Ampere];
wherein, $\omega_1$: is the angular frequency of the first current set [radians/second]; and
wherein, t: time [seconds].

Further, for second set of windings, there may be an opposite spatial sequence of the windings, so the fundamental components of the winding functions are:

$$Na_2(\theta_{h5}) = N_2 \cos(\theta_{h5});$$

$$Nb_2(\theta_{h5}) = N_2 \cos(\theta_{h5} + 2\pi/2);$$

$$Nc_2(\theta_{h5}) = N_2 \cos(\theta_{h5} - 2\pi/2);$$

wherein, $N_2$: peak winding function of second balanced three phase winding set [turns]; and
wherein, $\theta_{e2}$: is the spatial electrical angle for the second set of windings with the number of poles p2 around the electric machine periphery [radians].

From the trigonometric definitions, note the spatial sequence of $Na_2$, $Nb_2$ and $Nc_2$ is opposite of $Na_1$, $Nb_1$ and $Nc_1$. In addition, there may be an opposite temporal sequence for the currents flowing in the second set of windings, and hence those currents may be defined as:

$$ia_2(t) = Ipk_2 \cos(\omega_2 t);$$

$$ib_2(t) = Ipk_2 \cos(\omega_2 t + 2\pi/2);$$

$$ic_2(t) = Ipk_2 \cos(\omega_2 t - 2\pi/2);$$

wherein, $Ipk_2$: Peak (magnitude) of current flowing in second balanced three phase winding set [Ampere].
wherein, $\omega_2$: is the angular frequency of the second current set [radians/second]; and
wherein, t: time [seconds].

From the trigonometric definitions, note the temporal sequence of $ia_2$, $ib_2$ and $ic_2$ is opposite of $ia_1$, $ib_1$ and $ic_1$.

The combination of the balanced three phase winding set ($Na_1$, $Nb_1$ & $Nc_1$) with currents flowing in them ($ia_1$, $ib_1$, $ic_1$) may result in a rotating magnetic field in the clockwise direction in the outer (radial flux) or right (axial flux) stator core side. This clockwise direction rotating magnetic field may be in synchronism with the first rotating component of, e.g., an engine, rotating in the clockwise direction and may achieve power conversion: either in the motoring mode or generator mode.

Additionally, the combination of the balanced three phase winding set ($Na_2$, $Nb_2$ & $Nc_2$) with currents flowing in them ($ia_2$, $ib_2$, $ic_2$) may result in a rotating magnetic field in the counterclockwise direction in the inner (radial flux) or left (axial flux) stator core side. This counterclockwise direction rotating magnetic field may be in synchronism with the second component of, e.g., the engine, rotating in the counterclockwise direction, and may also achieve power conversion: either motoring or generator mode.

The two electric power conversions may therefore be completely independent, and may also be controllable via corresponding power converters connected to first and second sets of windings 250, 260. In such a manner, the electric machine 200 may be configured to operate with counter-rotating rotational components of, e.g., an engine.

It will be appreciated, however, that the exemplary electric machine 200 described above with reference to in Figs. 4 through 6 is provided by way of example only. In other example embodiments, electric machine 200 may have any other suitable configuration, such as any other suitable means for coupling the outer stator member 248 and inner stator member 258 to the nonferromagnetic inner housing 238, any other suitable cooling passage configuration, any other suitable arrangement of permanent magnets and stator coils, any other suitable type of magnet, etc. Further it will be appreciated that the exemplary electric machine 200 described above with reference to Figs. 4 through 6 is configured to generate or utilize alternating current electric power, such as three-phase alternating current electric power, in other embodiments, the exemplary electric machine 200 may additionally or alternatively be configured to generate or utilize any other suitable type of electric power, such as a direct current electric power.

Further, still, it will be appreciated that although the exemplary embodiment described above is configured as a radial flux electric machine 200, in other example embodiments, the electric machine 200 may have any other suitable configuration. For example, referring now to Fig. 7, an electric machine 200 incorporated into a gas turbine engine in accordance with another exemplary embodiment of the present disclosure is provided. The exemplary embodiment depicted in Fig. 7 may be configured in substantially the same manner as the exemplary embodiment described above with reference to Fig. 3.

For example, the exemplary electric machine 200 depicted in Fig. 7 generally includes a first rotor 202 rotatable with a first rotating component of the engine (which for the embodiment shown is a plurality of first turbine rotor blades 106), a second rotor 204 rotatable with a second rotating component of the engine (which for the embodiment shown may be a plurality of second turbine rotor blades 108; see Fig. 3), and a stator assembly 206 arranged between the first rotor 202 and the second rotor 204. Although not depicted in the schematic shown in Fig. 7, it will be appreciated that the stator assembly 206 includes a first set of windings 208 arranged adj acent to the first rotor 202 a second set of windings 210 arranged adjacent to the second rotor 204, and a nonferromagnetic inner housing 238 arranged between the first and second sets of windings 208, 210.

Notably, however, in the exemplary embodiment of Fig. 7, the electric machine 200 is not arranged in a radial flux configuration. Instead, for the embodiment shown, the first set of windings 208 and first rotor 202 are arranged in an axial flux configuration, and similarly, the second set of windings 210 and second rotor 204 are arranged in an axial flux configuration. In such a manner, it will be appreciated that the first set of windings 208 and first rotor 202 define a first air gap 216 therebetween along the axial direction A, and similarly, the second set of windings 210 and second rotor 204 define a second air gap 218 therebetween also on the axial direction A.

In still other exemplary embodiments, the first set of windings 208 and first rotor 202, and second set of windings 210 and second rotor 204, may additionally or alternatively be arranged in any other suitable flux configuration, such as a tapered flux configuration (e.g., wherein the first and second air gaps 216, 218 define an angle with a centerline of the electric machine 200/ engine greater than 0 degrees and less than 90 degrees).

Further, it will be appreciated that although the exemplary electric machine 200 described with reference to the figures above is positioned within the turbine section of the engine, and other exemplary embodiments, the electric machine 200 may be positioned at any other suitable location within the turbine section of the engine, or maybe positioned elsewhere in the engine. For example, and others exemplary embodiments, the electric machine 200 may be embedded within a compressor section of the engine, may be embedded within a fan section of the engine, may be embedded elsewhere at a location inward of a core air flow path of the engine along the radial direction R, or may be positioned outward of the core air flow path of the engine along the radial direction R (e.g., within a casing, within an outer nacelle or ducting, etc.).

Further, still, it will be appreciated that although the exemplary electric machines 200 described herein are shown and described as being positioned within an aeronautical gas turbine engine, in other exemplary embodiments, the electric machine 200 may additionally or alternatively be utilized with any other suitable gas turbine engine, such as an aeroderivative gas turbine engine, a power generation gas turbine engine, etc. Further, still, in other exemplary embodiments, the electric machine 200 may be utilized with any other suitable engine (such as an internal combustion engine), or with any other suitable machine.

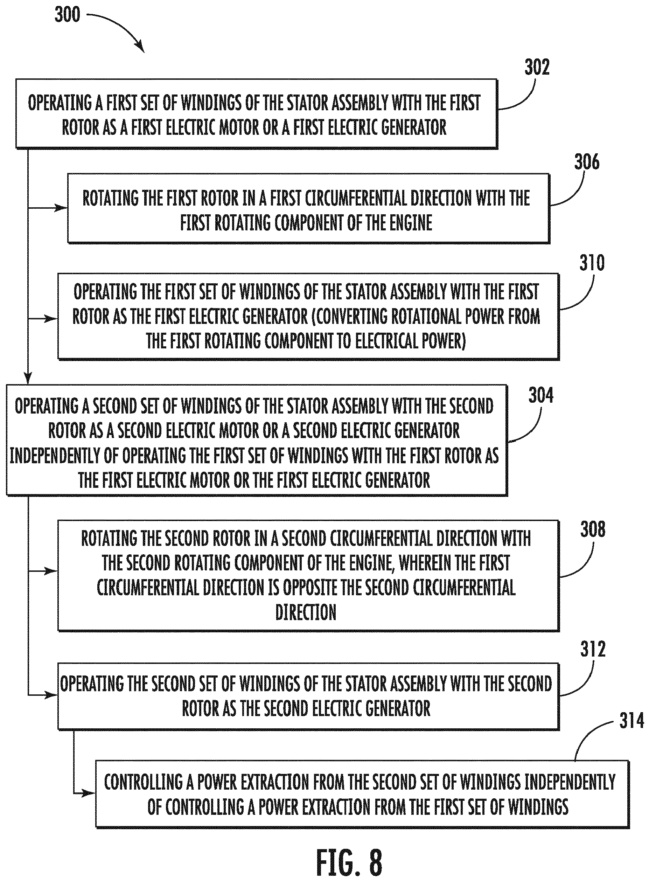

Referring now to Fig. 8, a flow diagram is provided of a method 300 for operating an electric machine in accordance with an exemplary aspect of the present disclosure. The electric machine operated by the method 300 may be configured in accordance with one or more of the exemplary embodiments described hereinabove and depicted in Figs. 1 through 7. As such, in at least certain exemplary aspects, an electric machine operated by the method 300 may be incorporated into an engine, such as an aeronautical gas turbine engine, and may include a first rotor rotatable with a first rotating component of the engine, a second rotor rotatable with a second rotating component of the engine, and a stator arranged between the first rotor and second rotor.

For the exemplary aspect depicted, the method 300 includes at (302) operating a first set of windings of the stator with the first rotor as a first electric motor or a first electric generator, and at (304) operating a second set of windings of the stator with the second rotor as a second electric motor or a second electric generator independently of operating the first set of windings with the first rotor as the first electric motor or the first electric generator at (302).

As used herein, the term "independently" with respect to the operation of the first set of windings and first rotor relative to the second set of windings and second rotor refers to operating one of these at a rotational speed, in a rotational direction, at a power delivery rate, at a power extraction rate, or some combination thereof that is not tied to a respective one of a rotational speed, a rotational direction, a power delivery rate, or a power extraction rate, or a combination thereof of the other.

For example, in the exemplary aspect depicted, operating the first set of windings of the stator with the first rotor at (302) includes at (306) rotating the first rotor in a first circumferential direction with the first rotating component of the engine. Further, operating the second set of windings of the stator with the second rotor at (304) includes at (308) rotating the second rotor in a second circumferential direction with the second rotating component of the engine, wherein the first circumferential direction is opposite the second circumferential direction.

Further by way of example, for the exemplary aspect depicted, operating the first set of windings of the stator with the first rotor at (302) includes at (310) operating the first set of windings of the stator with the first rotor as the first electric generator (converting rotational power from the first rotating component to electrical power), and operating the second set of windings of the stator with the second rotor at (304) includes at (312) operating the second set of windings of the stator with the second rotor as the second electric generator. Moreover, for the exemplary aspect depicted, operating the second set of windings of the stator with the second rotor as the second electric generator at (312) includes at (314) controlling a power extraction from the second set of windings independently of controlling a power extraction from the first set of windings.

For example, in response to, e.g., data received related to one or more operating conditions of the engine (e.g., from one or more engine sensors, other controllers, etc.), the method 300 may decide to increase or decrease a ratio power extraction from the first set of windings to the second set of windings.

Alternatively, however, in response to, e.g., data received related to one or more operating conditions of the engine, the method 300 may instead operate one of the first set of windings and first rotor or second set of windings and second rotor as an electric motor, and the other of the first set of windings and first rotor or second set of windings and second rotor as an electric generator. In such a manner, the method 300 may transfer power from one of the first or second rotating components of the engine to the other of the first or second rotating components of the engine.

Alternatively, still, in response to, e.g., data received related to one or more operating conditions of the engine, the method 300 may instead decide to operate both the first set of windings and first rotor and second set of windings and second rotor as electric motors. In such a case, the method 300 may further decide to increase or decrease a ratio power provided to the first set of windings to the second set of windings.

In at least certain exemplary aspects, the method 300 may further operate the electric machine to control a loading on one or more components of, e.g., the engine within which the electric machine is integrated. For example, the method 300 may control the electric machine to reduce a loading on one or more bearings supporting at least in part the electric machine. More specifically, as is depicted in phantom, the method 300 may include at (316) controlling a ratio of power extraction from, provision to, or both the first set of windings to power extraction from, provision to, or both the second set of windings to control a net load on one or more bearings of the engine. With such a step, the control step at (316) may further include receiving data indicative of a load on the one or more bearings of the engine and adjusting the ratio in response to the receipt of the data indicative of the load on the one or more bearings of the engine.

As will be appreciated, adjusting the ratio may control an airgap flux density magnitude of the two magnetic fields travelling in opposite directions in both airgaps. In particular, such may cancel (or substantially cancel, or more fully cancel) radial forces in a radial topology configuration or axial forces in an axial flux topology. Such may therefore reduce a loading(s) on the one or more bearings.

It will be appreciated that operating an electric machine in accordance with one or more of the exemplary aspects of the present disclosure may allow for a more flexible control functionality, allowing for a single electric machine to effectively control multiple rotating shafts or other components of an engine, relative to one another.

Further aspects of the present disclosure may be provided in the following clauses:

An engine includes a first rotating component; a second rotating component separate from the first rotating component; and an electric machine, the electric machine including a first rotor rotatable with the first rotating component; a second rotor rotatable with the second rotating component; and a stator assembly arranged between the first rotor and the second rotor, the stator assembly including a first set of windings arranged adjacent to the first rotor, a second set of windings arranged adjacent to the second rotor, and a non-ferromagnetic inner housing arranged between the first set of windings and the second set of windings.

The engine of one or more of these clauses, wherein the inner housing of the stator assembly defines a plurality of cooling passages extending therethrough.

The engine of one or more of these clauses, further including a liquid cooling system, wherein the liquid cooling system is in fluid communication with the plurality of cooling passages, which may be defined in the inner housing of the stator assembly.

The engine of one or more of these clauses, wherein the inner housing of the stator assembly is formed through an additive manufacturing process.

The engine of one or more of these clauses, wherein the inner housing of the stator assembly substantially completely magnetically isolates the first set of windings from the second set of windings.

The engine of one or more of these clauses, wherein the engine is an aeronautical gas turbine engine.

The engine of one or more of these clauses, wherein the first rotating component is configured to rotate in a first circumferential direction of the engine, wherein the second rotating component is configured to rotate in a second circumferential direction of the engine, and wherein the first circumferential direction is opposite of the second circumferential direction.

The engine of one or more of these clauses, wherein the first rotating component includes a first plurality of turbine rotor blades, and wherein the second rotating component includes a second plurality of turbine rotor blades interdigitated with the first plurality of turbine rotor blades.

The engine of one or more of these clauses, wherein the first set of windings includes a first plurality of stator coils, wherein the second set of windings includes a second set of stator coils, and wherein the first plurality of stator coils is arranged in a pattern opposite a pattern of the second plurality of stator coils.

The engine of one or more of these clauses, wherein a first temporal sequence of currents in the first set of windings is opposite a second temporal sequence of currents in the second set of windings.

The engine of one or more of these clauses, wherein the first set of windings and the first rotor are arranged in a radial flux configuration, and wherein the second set of windings and the second rotor are similarly arranged in a radial flux configuration.

The engine of one or more of these clauses, wherein the first set of windings and the first rotor are arranged in an axial flux configuration, and wherein the second set of windings and the second rotor are similarly arranged in an axial flux configuration.

The engine of one or more of these clauses, wherein the inner housing of the stator assembly is a structural frame for the stator assembly.

An electric machine for an engine including: a first rotor; a second rotor; and a stator assembly arranged between the first rotor and the second rotor, the stator assembly including a first set of windings arranged adjacent to the first rotor, a second set of windings arranged adjacent to the second rotor, and a non-ferromagnetic inner housing arranged between the first set of windings and the second set of windings.

The electric machine of one or more of these clauses, wherein the non-ferromagnetic inner housing of the stator assembly substantially completely magnetically isolates the first set of windings from the second set of windings.

A method of operating an electric machine for an engine, the electric machine including a first rotor rotatable with a first rotating component of the engine, a second rotor rotatable with a second rotating component of the engine, and a stator assembly arranged between the first rotor and the second rotor, the method including: operating a first set of windings of the stator assembly with the first rotor as a first electric motor or a first electric generator; and operating a second set of windings of the stator assembly with the second rotor as a second electric motor or a second electric generator independently of operating the first set of windings of the stator assembly with the first rotor as the first electric motor or the first electric generator.

The method of one or more of these clauses, wherein the first set of windings of the stator assembly is arranged adjacent to the first rotor, wherein the second set of windings of the stator assembly is arranged adjacent to the second rotor, and wherein the stator assembly of the electric machine further includes a inner housing arranged between the first set of windings and the second set of windings.

The method of one or more of these clauses, wherein operating the first set of winding of the stator assembly with the first rotor as the first electric motor or the first electric generator includes operating the first set of windings of the stator assembly with the first rotor as the first electric generator, and wherein operating the second set of windings of the stator assembly with the second rotor as the second electric motor or the second electric generator includes operating the second set of windings of the stator assembly with the second rotor as the second electric generator.

The method of one or more of these clauses, wherein operating the second set of windings of the stator assembly with the second rotor as the second electric generator includes controlling a power extraction from the second set of windings independently of controlling a power extraction from the first set of windings.

The method of one or more of these clauses, further including controlling a ratio of power extraction from, provision to, or both the first set of windings to power extraction from, provision to, or both the second set of windings to control a net load on one or more bearings of the engine.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

**1.** An engine comprising:

a first rotating component;
a second rotating component separate from the first rotating component; and
an electric machine (200), the electric machine (200) comprising

a first rotor (202) rotatable with the first rotating component;

a second rotor (204) rotatable with the second rotating component;
a stator assembly (206) arranged between the first rotor (202) and the second rotor (204), the stator assembly (206) comprising a first set of windings (208) arranged adjacent to the first rotor (202), a second set of windings (208) arranged adjacent to the second rotor (204), and a non-ferromagnetic inner housing (238) arranged between the first set of windings (208) and the second set of windings (208).

**2.** The engine of claim 1, wherein the inner housing (238) of the stator assembly (206) defines a plurality of cooling passages extending therethrough.

**3.** The engine of claim 2, further comprising:
a liquid cooling system (240), wherein the liquid cooling system (240) is in fluid communication with the plurality of cooling passages.

**4.** The engine of claim 2 or 3, wherein the inner housing (238) of the stator assembly (206) is formed through an additive manufacturing process.

**5.** The engine of any preceding claim, wherein the inner housing (238) of the stator assembly (206) substantially completely magnetically isolates the first set of windings (208) from the second set of windings (208).

**6.** The engine of any preceding claim, wherein the engine is an aeronautical gas turbine (104) engine.

**7.** The engine of claim 6, wherein the first rotating component is configured to rotate in a first circumferential direction of the engine, wherein the second rotating component is configured to rotate in a second circumferential direction of the engine, and wherein the first circumferential direction is opposite of the second circumferential direction.

**8.** The engine of claim 7, wherein the first rotating component comprises a first plurality of turbine rotor blades (106), and wherein the second rotating component comprises a second plurality of turbine rotor blades (106) interdigitated with the first plurality of turbine rotor blades (106).

**9.** The engine of claim 7 or 8, wherein the first set of windings (208) includes a first plurality of stator (84) coils, wherein the second set of windings (208) includes a second set of stator (84) coils, and wherein the first plurality of stator (84) coils is arranged in a pattern opposite a pattern of the second plurality of stator (84) coils.

**10.** The engine of any of claims 7 to 9, wherein a first temporal sequence of currents in the first set of windings (208) is opposite a second temporal sequence of currents in the second set of windings (208).

**11.** The engine of any preceding claim, wherein the first set of windings (208) and the first rotor (202) are arranged in a radial flux configuration, and wherein the second set of windings (208) and the second rotor (204) are similarly arranged in a radial flux configuration.

**12.** The engine of any preceding claim, wherein the first set of windings (208) and the first rotor (202) are arranged in an axial flux configuration, and wherein the second set of windings (208) and the second rotor (204) are similarly arranged in an axial flux configuration.

**13.** The engine of any preceding claim, wherein the inner housing (238) of the stator assembly (206) is a structural frame for the stator assembly (206).

**14.** A method (300) of operating an electric machine (200) for an engine, the electric machine (200) comprising a first rotor (202) rotatable with a first rotating component of the engine, a second rotor (204) rotatable with a second rotating component of the engine, and a stator assembly (206) arranged between the first rotor (202) and the second rotor (204), the method (300) comprising:

operating a first set of windings (208) of the stator assembly (206) with the first rotor (202) as a first electric motor or a first electric generator; and
operating a second set of windings (208) of the stator assembly (206) with the second rotor (204) as a second electric motor or a second electric generator independently of operating the first set of windings (208) of the stator assembly (206) with the first rotor (202) as the first electric motor or the first electric generator.

**15.** The method (300) of claim 14, wherein the first set of windings (208) of the stator assembly (206) is arranged adjacent to the first rotor (202), wherein the second set of windings (208) of the stator assembly (206) is arranged adjacent to the second rotor (204), and wherein the stator assembly (206) of the electric machine (200) further comprises an inner housing (238) arranged between the first set of windings (208) and the second set of windings (208).

10
12
14
16
18
20
22
24
26
28
30
32
34
36
37
38
40
42
44
46
48
50
52
54
56
58
60
62
64
66
68
70
72
73
74
75
76
78
80
82
84
P
A
R

FIG. 1

100
104
106
106A
106B
106C
108
108A
108B
108C
110
112
114
116
118
120
122
124
126
128
132
134
136
137
138
144
146
148
150
152
154
158
160
200
202
204
206
102
A
R
$C_1$
$C_2$

FIG. 2

138
128
122
146
148
144
124
200
152
216
212
202
208
238
210
214
204
240
242
244
218
224
226
206
228
230
222
220
234
236
232
134
158
102
106A
R
A

FIG. 3

200
202
204
206
208
210
212
214
216
218
238
246
246
248
250
252
254
256
256A
256B
256C
258
260
262
264
266
266A
266B
266C
268
270
278
102
R
$C_1$
$C_2$

FIG. 4

202
254
246
250
212
268
248
256
200
216
208
206
276
272
238
278
274
258
260
210
266
218
214
R
246
204
C2
264
270
A
C1

FIG. 5

200
212
272
216
252
254
248
202
268
206
276
246
208
256
250
278
260
238
258
R
A
246
270
274
C2
204
C1
266
210
264
214
218

FIG. 6

138
102
128
122
124
158
152
214
204
206
218
216
202
212
200
134
106A
R
A
FIG. 7

300
302
OPERATING A FIRST SET OF WINDINGS OF THE STATOR ASSEMBLY WITH THE FIRST ROTOR AS A FIRST ELECTRIC MOTOR OR A FIRST ELECTRIC GENERATOR
306
ROTATING THE FIRST ROTOR IN A FIRST CIRCUMFERENTIAL DIRECTION WITH THE FIRST ROTATING COMPONENT OF THE ENGINE
310
OPERATING THE FIRST SET OF WINDINGS OF THE STATOR ASSEMBLY WITH THE FIRST ROTOR AS THE FIRST ELECTRIC GENERATOR (CONVERTING ROTATIONAL POWER FROM THE FIRST ROTATING COMPONENT TO ELECTRICAL POWER)
304
OPERATING A SECOND SET OF WINDINGS OF THE STATOR ASSEMBLY WITH THE SECOND ROTOR AS A SECOND ELECTRIC MOTOR OR A SECOND ELECTRIC GENERATOR INDEPENDENTLY OF OPERATING THE FIRST SET OF WINDINGS WITH THE FIRST ROTOR AS THE FIRST ELECTRIC MOTOR OR THE FIRST ELECTRIC GENERATOR
308
ROTATING THE SECOND ROTOR IN A SECOND CIRCUMFERENTIAL DIRECTION WITH THE SECOND ROTATING COMPONENT OF THE ENGINE, WHEREIN THE FIRST CIRCUMFERENTIAL DIRECTION IS OPPOSITE THE SECOND CIRCUMFERENTIAL DIRECTION
312
OPERATING THE SECOND SET OF WINDINGS OF THE STATOR ASSEMBLY WITH THE SECOND ROTOR AS THE SECOND ELECTRIC GENERATOR
314
CONTROLLING A POWER EXTRACTION FROM THE SECOND SET OF WINDINGS INDEPENDENTLY OF CONTROLLING A POWER EXTRACTION FROM THE FIRST SET OF WINDINGS

FIG. 8

Europäisches Patentamt
European Patent Office
Office européen des brevets

# EUROPEAN SEARCH REPORT

Application Number
EP 21 17 9691

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y<br>A | US 2010/244446 A1 (QU RONGHAI [US] ET AL) 30 September 2010 (2010-09-30)<br>* paragraphs [0015], [0016]; figures 3,7 * | 1,4,6-8, 11,14,15<br>2,3,12<br>5,9,10, 13 | INV.<br>H02K1/20<br>H02K9/19<br>H02K16/02 |
| Y | KR 2013 0000279 A (LG ELECTRONICS INC [KR]) 2 January 2013 (2013-01-02)<br>* abstract; figures 2,3 * | 2,3 | |
| Y | US 8 558 425 B2 (STAHLHUT RONNIE DEAN [US]; SHOEMAKER JIM MILTON [US]; DEERE & CO [US]) 15 October 2013 (2013-10-15)<br>* abstract; figures 1,4,5 * | 12 | |
| A | US 2015/252507 A1 (KIM BYUNG SOO [KR] ET AL) 10 September 2015 (2015-09-10)<br>* abstract; figure 6 * | 1 | |
| | | | TECHNICAL FIELDS SEARCHED (IPC) |
| | | | H02K |

The present search report has been drawn up for all claims

1

| Place of search | Date of completion of the search | Examiner |
|---|---|---|
| The Hague | 16 November 2021 | Espinós Iglesias, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 21 17 9691

This annex lists the patent family members relating to the patent documents cited in the above-mentioned European search report. The members are as contained in the European Patent Office EDP file on
The European Patent Office is in no way liable for these particulars which are merely given for the purpose of information.

16-11-2021

| Patent document cited in search report | Publication date | Patent family member(s) | Publication date |
|---|---|---|---|
| US 2010244446 A1 | 30-09-2010 | CA 2612040 A1 | 07-06-2008 |
| | | CN 101197520 A | 11-06-2008 |
| | | EP 1931015 A2 | 11-06-2008 |
| | | JP 5483812 B2 | 07-05-2014 |
| | | JP 2008148550 A | 26-06-2008 |
| | | US 2008174194 A1 | 24-07-2008 |
| | | US 2010244446 A1 | 30-09-2010 |
| KR 20130000279 A | 02-01-2013 | NONE | |
| US 8558425 B2 | 15-10-2013 | US 2008100174 A1 | 01-05-2008 |
| | | WO 2008057170 A2 | 15-05-2008 |
| US 2015252507 A1 | 10-09-2015 | CN 104884699 A | 02-09-2015 |
| | | US 2015252507 A1 | 10-09-2015 |

EPO FORM P0459

For more details about this annex : see Official Journal of the European Patent Office, No. 12/82